Europäisches Patentamt

European Patent Office

Office européen des brevets

(19)

(11) EP 1 298 297 A2

(12) **EUROPEAN PATENT APPLICATION**

(43) Date of publication:
02.04.2003 Bulletin 2003/14

(51) Int Cl.7: **F02C 7/16**, F01K 23/10,
F01D 5/08

(21) Application number: 02021818.6

(22) Date of filing: 27.09.2002

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: 01.10.2001 JP 2001305665

(71) Applicant: **Mitsubishi Heavy Industries, Ltd.
Tokyo 100-0005 (JP)**

(72) Inventors:
• **Hyakutake, Yoshinori,
Mitsubishi Heavy Ind., Ltd.
Takasago, Hyogo-ken 676-8686 (JP)**
• **Fujita, Yasuhiro, Mitsubishi Heavy Ind., Ltd.
Takasago, Hyogo-ken 676-8686 (JP)**

(74) Representative: **HOFFMANN - EITLE
Patent- und Rechtsanwälte
Arabellastrasse 4
81925 München (DE)**

(54) **Control device for gas turbine cooling steam pressure**

(57) A valve that adjusts a pressure of a cooling steam is arranged downstream of a dynamic blade and a stationary blade. This valve is controlled such that a cooling steam pressures in the dynamic blade and the stationary blade are maintained higher than a value obtained by adding a margin pressure to a casing air pressure in a casing.

## FIG.1

EP 1 298 297 A2

Printed by Jouve, 75001 PARIS (FR)

**Description**

BACKGROUND OF THE INVENTION

1) Field of the Invention

The present invention relates to a gas turbine in which the dynamic and stationary blades can be sufficiently cooled to thereby suppress a trip during the operation to the minimum. The present invention also relates to a gas turbine combined plant, a cooling steam pressure adjusting method, and a computer program for realizing the method on a computer.

2) Description of the Related Art

To increase thermal efficiency in the gas turbine combined cycle, a technique in which steam is used as a coolant instead of the air, to cool hot sections such as a dynamic blade and a stationary blade of the gas turbine with the steam is now being used. The specific heat at constant pressure of dry steam is cp = 1.86 kJ/kgK under a standard condition, which is a value almost twice as large as the specific heat at constant pressure of the air, cp = 1.00 kJ/kgK. Therefore, the steam has a large heat capacity as compared with the air of the same mass, and the endothermic effect thereof increases. Further, if wet steam is used as the coolant, latent heat of vaporization of the wet portion can be used for cooling, and hence the endothermic effect thereof further increases. Therefore, when the steam is used as the coolant, the cooling efficiency can be increased than when air is used as the coolant. As a result, the temperature of the combustion gas at the entrance of the turbine can be set high. As a result, the thermal efficiency can be improved.

The air from the compressor has been conventionally used for cooling the dynamic and stationary blades of the turbine. However, if this compressed air is used for cooling, the work that can be taken out from the turbine decreases. Hence, if steam is used instead of the air, the cooling air for the dynamic and stationary blades can be saved, and the work that can be recovered by the turbine increases by this amount, thereby the generating efficiency can be increased.

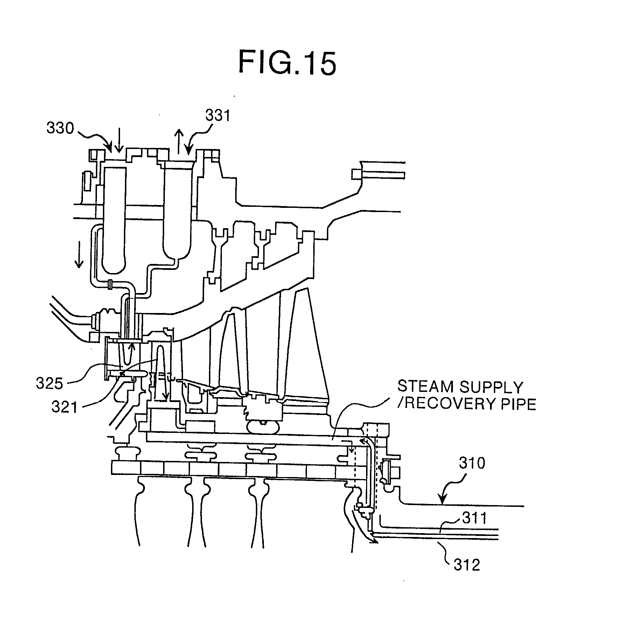

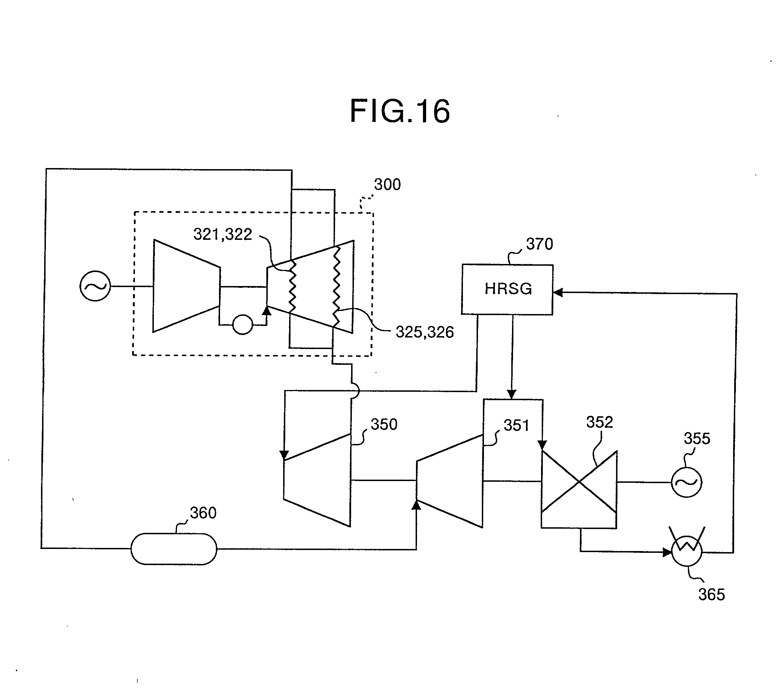

Fig. 15 is a partial cross section of a gas turbine in which steam cooling is applied for dynamic and stationary blades. Fig. 16 is a schematic diagram that shows a gas turbine combined plant adopting steam cooling for hot sections. In this gas turbine combined electric generating plant, thermal energy contained in the exhaust gas of the gas turbine is recovered by a heat recovery steam generator (HRSG) 370. Steam is generated by the thermal energy in the recovered exhaust gas of the gas turbine, and the high-temperature and high-pressure steam is first supplied to a high pressure steam turbine 350 to drive it, to thereby generate power by the generator 355 coupled thereto.

The steam having worked in the high pressure steam turbine 350 is guided to a dynamic blade 321 through a steam supply pipe 311 provided in a turbine main spindle 310 of the gas turbine. Steam is also supplied to a stationary blade 325 from a steam supply port 330 provided outside of the casing of the gas turbine. A cooling flow passage is respectively provided in the dynamic blade 321 and the stationary blade 325, and the steam guided to the dynamic blade 321 and the stationary blade 325 absorbs heat of the combustion gas from the internal surface of the flow passage, while passing through this cooling flow passage, and is exhausted outside of the flow passage. Thereafter, the steam having cooled the dynamic blade 321 passes through a steam recoverypipe 312 provided in the turbine main spindle 310 and is taken out of the turbine, and the steam having cooled the stationary blade 325 is taken out of the turbine from a steam recovery port 331.

This cooling steam is guided to a mixing chamber 360 and mixed with the cooling steam having cooled the combustor tail pipe and the like, and the mixed steam is used as a working fluid for driving an intermediate pressure steam turbine 351 and a low pressure steam turbine 352. The steam having driven the intermediate pressure steam turbine 351 and the low pressure steam turbine 352 is recovered to water form by a steam condenser 365, and then supplied again to the HRSG 370 to repeat the above-described process.

When the load of the gas turbine is increased, the amount of air used for combustion immediately increases, with an increase of the load, and hence the pressure in the casing (casing pressure) increases. If the casing pressure becomes higher than the steam pressure in the dynamic and stationary blades, the combustion gas may flow backward into the cooling flow passage in the dynamic and stationary blades, from a cooling air supply hole provided in the dynamic and stationary blades, thereby the dynamic and stationary blades overheat, causing a trip (suspension) of the gas turbine. Therefore, it is necessary to control such that the casing pressure always becomes lower than the steam pressure for cooling'the dynamic and stationary blades.

However, since the heat capacity of the gas turbine is smaller than that of the HRSG, the casing pressure also increases as the load increases. On the other hand, the steam system such as the HRSG and the steam turbine has a large heat capacity because they use water as a working fluid. Therefore, even if the load changes, supply of the steam does not immediately follow this change. Hence, in the conventional gas turbine, which uses the steam cooling, supply of the cooling steam cannot follow the increase of the load, and particularly when the load increases rapidly, a trip of the gas turbine may be caused.

If a differential pressure between the inlet and the outlet of the cooling flow passage provided in the dynamic and stationary blades becomes small, the cooling steam becomes hard to flow, and as a result, the dynamic and stationary blades overheat to cause a trip. For example, when some abnormality occurs in the steam turbine downstream of the dynamic and stationary blades, or in the steam supply system upstream of the dynamic and stationary blades, the differential pressure between the inlet and the outlet of the cooling flow passage provided in the dynamic and stationary blades becomes small. Then, the volume of cooling steam flowing to the dynamic and stationary blades decreases, and the dynamic and stationary blades overheat to thereby cause a trip of the gas turbine.

The Japanese Patent No. 2,685,336 describes a gas turbine combined plant that overcomes such drawback. In this gas turbine combined plant, a bias value is added to a signal from a pressure detector which detects an operating parameter representing a gas path pressure, and the signal is output as a steam pressure setting signal, to thereby control so that the pressure of the cooling steam does not drop below a value obtained by adding the bias value to the gas pressure. However, in this gas turbine combined plant, the flow rate of the steam supplied to the dynamic and stationary blades is controlled by a steam flow rate control unit installed upstream of the dynamic and stationary blades, being hot members. Therefore, the response of the steam pressure is slow, and the increase of the steam pressure for cooling the dynamic and stationary blades may not be able to catch up with the increase of the casing pressure. As a result, a trip of the gas turbine cannot be suppressed sufficiently, due to the backflow of the combustion gas.

## SUMMARY OF THE INVENTION

It is an object of the present invention to provide a gas turbine in which the dynamic and stationary blades can be sufficiently cooled to thereby suppress a trip during the operation to the minimum. It is another object of the present invention to provide a gas turbine combined plant, a cooling steam pressure adjusting method, and a computer program for realizing the method on a computer.

The gas turbine according to one aspect of the present invention comprises at least one hot member that is at high temperature and requires cooling, a steam supply unit that supplies cooling steam to the hot member, an adjusting unit, provided downstream of the hot member, that adjusts the pressure of the cooling steam supplied to the hot member, a measuring unit that measures the pressure of the cooling steam in the hot member and a casing pressure of the gas turbine, and a control unit that controls the adjusting unit such that the pressure of the cooling steam is maintained higher than the casing pressure based on the pressure of the cooling steam and the casing pressure.

In this gas turbine, to keep the steam pressure for cooling dynamic and stationary blades, being hot members, higher than the casing pressure, in the gas turbine having a steam cooling system, the unit which adjusts the steam pressure for cooling the dynamic and stationary blades, such as a valve or the like, is provided downstream of the dynamic blade or the stationary blade. Conventionally, a valve or the like is provided upstream of the dynamic and stationary blades, to control such that the steam pressure for cooling the dynamic and stationary blades becomes higher than the casing pressure. However, since a cooling steam supply source such as the HRSG existing upstream of the dynamic and stationary blades has a large heat capacity, and the flow rate and the pressure of the steam supplied from there hardly change. Therefore, the steam pressure for cooling the dynamic and stationary blades is dominated by the downstream of the dynamic and stationary blades. Therefore, conventionally, even if the adjusting unit provided upstream of the dynamic and stationary blades is adjusted, the cooling steam pressure can be hardly changed.

Since a pressure adjusting unit such as a valve is provided downstream of the dynamic and stationary blades in this gas turbine, the steam pressure for cooling the dynamic and stationary blades can be controlled in a large span of adjustable range. As a result, since the cooling steam pressure of the dynamic and stationary blades can be controlled so as to be always higher than the casing pressure, following the fluctuations of the casing pressure, a trip of the gas turbine can be suppressed, thereby enabling stable operation. As the control of the cooling steam pressure at this time, for example, there is a control method in which a pressure ratio between the cooling steam pressure and the casing pressure is kept in a certain value, so that the steam pressure for cooling the dynamic and stationary blades is always higher than the casing pressure. The hot members of the gas turbine that require cooling includes a dynamic blade, a stationary blade, a rotor disk, a turbine main spindle and the like, however, the hot members in this inventions particularly refer to the dynamic blade and the stationary blade of the gas turbine (and so forth).

The downstream of the hot members stands for a section between an outlet of the hot members and a steam condenser. That is, it is a section where the steam having cooled the hot members is recovered from the gas form to the liquid form. The steam pressure adjusting unit is to be provided at any point during this section, but it is desired to provide the steam pressure adjusting unit ahead of equipment which consumes the steam in a large amount, such as an intermediate pressure steam turbine and a low pressure steam turbine. This is because there is the equipment which consumes the steam in a large amount downstream of the steam pressure adjusting unit, and hence if the steam pressure adjusting unit is adjusted, the steam quickly flows to the downstream equipment, and the upstream pressure changes quickly. For example, it is desired to use an IP-GV 30 and an IP-TB 40 which are arranged downstream of the dynamic and stationary blades, being the hot members, and upstream of the intermediate pressure steam turbine, as the pressure adjusting unit for the cooling steam supplied to the hot members. In this case, a reheater may be interposed in the middle thereof. Even in such a case, if the IP-GV or the like is adjusted, the steam will flow quickly to the downstream equipment, to thereby quickly change the steam pressure upstream thereof.

When the steam having cooled the dynamic and stationary blades, being the hot members, is bifurcated to let it flow to the steam condenser, the section from the outlet of the dynamic and stationary blades to the steam condenser becomes the downstream of the hot members. In this case, the unit such as a valve, which adjusts the steam flow after cooling to be bifurcated to the steam condenser becomes the steam pressure adjusting unit for the hot members. In the steam condenser, since an abrupt pressure drop occurs when the steam is recovered to the water form, the steam pressure adjusting unit is provided downstream of the hot members and upstream of the steam condenser to adjust the pressure, the upstream pressure quickly changes, which is preferable. After the cooling steam has been bifurcated, this steam may be supplied not only to the steam condenser but also to the intermediate pressure steam turbine.

The gas turbine according to another aspect of the present invention comprises at least one hot member that is at high temperature and requires cooling, a steam supply unit which supplies cooling steam to the hot member, a bifurcating flow passage provided downstream of the hot member that bifurcates the cooling steam, an adjusting unit that adjusts the pressure of cooling steam supplied to the hot member by changing the volume of the cooling steam supplied to the bifurcating flow passage, a measuring unit which measures a cooling steam pressure in the hot member and a casing pressure of the gas turbine, and a control unit that controls the adjusting unit such that the pressure of the cooling steam is maintained higher than the casing pressure based on the pressure of the cooling steam and the casing pressure.

This gas turbine comprises a steam flow passage for bifurcating the cooling steam and letting it flow, downstream of the dynamic blade or the stationary blade of the gas turbine. To control the steam pressure for cooling the dynamic blade or the stationary blade, it is desired to arrange a pressure adjusting unit, such as a valve, at a position as close to the object to be controlled as possible, to control the pressure. In this gas turbine, the cooling steam is made to flow to the steam flow passage for bifurcating the cooling steam and letting it flow, which is provided downstream of the dynamic blade or the stationary blade and prior to entering into the mixing chamber and the HRSG, to thereby adjust the steam pressure for cooling the dynamic and stationary blades. Since the steam pressure for cooling the dynamic and stationary blades can be adjusted more quickly than the above-described gas turbine, even if the casing air pressure has suddenly increased, the steam pressure for cooling the dynamic and stationary blades can be increased immediately. As a result, a trip of the gas turbine can be suppressed, thereby enabling stable operation.

The control device according to still another aspect of the present invention adjusts the pressure of a cooling steam supplied to a hot member, which require cooling, of a gas turbine. The gas turbine including a steam supply unit that supplies the steam to the hot member, an adjusting unit that adjusts the pressure of the cooling steam, and a measuring unit that measures the pressure of the cooling steam and a casing pressure of the gas turbine. The control device comprises a processor that compares the pressure of the cooling steam and the casing pressure and generates and outputs a signal for operating the adjusting unit such that the pressure of the cooling steam is maintained higher than the casing pressure, and a control unit that controls the adjusting unit based on the signal output from the processor.

This control device controls a gas turbine having a steam cooling system in which a adjusting unit for the dynamic and stationary blades, such as a valve, is provided downstream of the dynamic blade or the stationary blade. The control device compares the casing pressure and the steam pressure for cooling the dynamic blade or the stationary blade, and controls the adjusting unit for the dynamic and stationary blades based on the comparison result. Since this control device is constructed such that the pressure adjusting unit such as a valve provided downstream of the dynamic and stationary blades is controlled so that the steam pressure for cooling the dynamic and stationary blades is made higher than the casing pressure, the cooling steam pressure can be controlled with good responsiveness and in a large span of adjustable range. As a result, the steam pressure for cooling the dynamic and stationary blades can be always controlled to be higher than the casing pressure, following the fluctuations of the casing pressure, and a trip of the gas turbine can be suppressed, thereby enabling stable operation.

The control device according to still another aspect of the present invention adjusts the pressure of a cooling steam supplied to a dynamic blade or a stationary blade, which require cooling, of a gas turbine. The gas turbine including a steam supply unit that supplies the steam to the hot member, an adjusting unit that adjusts the pressure of the cooling steam, and a measuring unit that measures the pressure of the cooling steam and a casing pressure of the gas turbine. The control device comprises a calculator that calculates a difference between the pressure of the cooling steam and the casing pressure and sets an operation speed of the adjusting unit based on a rate of change of the difference between the pressures, and a control unit which controls the adjusting unit based on a signal from the calculator.

This control device controls a gas turbine comprising a steam cooling system in which a adjusting unit for the dynamic and stationary blades, such as a valve, is provided downstream of the dynamic blade or the stationary blade. The control device determines the adjusting speed of the adjusting unit based on a difference between pressures in the dynamic and stationary blades and in the casing, and controls the adjusting unit at the determined adjusting speed. For example, when it'is judged that the casing pressure has suddenly increased and an absolute value of the rate of change of the difference between the steam pressure for cooling the dynamic and stationary blades and the casing pressure has exceeded a certain value, the control device controls a valve which is the control unit so as to be opened or closed quickly. As described above, when the casing pressure rapidly approaches the steampressure for cooling the dynamic and stationary blades, the valve is quickly opened or closed, and hence the steam pressure for cooling the dynamic and stationary blades changes quickly. As a result, with respect to an abrupt change of the casing pressure or the like, the steam pressure for cooling the dynamic and stationary blades can be kept higher than the casing pressure, and a trip of the gas turbine can be suppressed. Not only the adjusting speed of the cooling steam pressure control unit such as a valve, but also the opening and closing degree of the valve may be controlled. In this manner, the steam pressure for cooling the dynamic and stationary blades can be adjusted more quickly, and hence a risk of causing a trip of the gas turbine can be decreased further.

The cooling steam pressure adjusting method according to still another aspect of the present invention is employed in a gas turbine of cooling a hot member of the gas turbine with cooling steam by maintaining a pressure of the cooling steam in the hot member higher than a casing pressure of the gas turbine. The method comprises measuring the pressure of the cooling steam and the casing pressure, comparing the pressure of the cooling steam and the casing pressure, and controlling the pressure of the cooling steam based on a difference between the pressure of the cooling steam and the casing pressure.

This cooling steam pressure adjusting method is applied to a gas turbine comprising a steam cooling system in which a unit which adjusts a steam pressure for cooling the dynamic and stationary blades, such as a valve, is provided downstream of the dynamic blade or the stationary blade. In this method, the adjusting unit is controlled so that the steam pressure for cooling the dynamic and stationary blades becomes higher than the casing pressure. Since the steam pressure for cooling the dynamic and stationary blades is adjusted by controlling the pressure adjusting unit, such as a valve, provided downstream of the dynamic and stationary blades, the steam pressure for cooling the dynamic and stationary blades can be controlled with good responsiveness and in a large span of adjustable range. As a result, the steam pressure for cooling the dynamic and stationary blades can be always controlled to be higher than the casing pressure, following the fluctuations of the casing pressure, and a trip of the gas turbine can be suppressed, thereby enabling stable operation. Further, by a program for allowing a computer to execute the cooling steam pressure adjusting method, the cooling steam pressure adjusting method can be realized, by using a computer.

The computer program according to still another aspect of the present invention realizes the cooling steam pressure adjusting method according to the present invention on a computer.

The gas turbine combined plant according to still another aspect of the present invention comprises a gas turbine having at least one hot member that is at high temperature and cooled with steam, the gas turbine exhausting an exhaust gas, a steam generator which generates steam using the exhaust gas, a piping which guides the steam generated by the steam generator to the hot member, an adjusting unit, provided in the piping and downstream of the hot member, that adjusts the pressure of the steam, in the piping, that is supplied to the hot member, a measuring unit that measures a pressure of the steam in the hot member and a casing pressure of the gas turbine, a control unit that controls the adjusting unit such that the pressure of the steam is maintained higher than the casing pressure based on the pressure of the steam and the casing pressure, and a steam turbine that is driven by the steam generated by the steam generator.

This gas turbine combined plant is a gas turbine combined plant comprising a gas turbine having a steam cooling system, wherein the unit which adjusts the steam pressure for cooling the dynamic and stationary blades, such as a valve, is provided downstream of the dynamic blade or the stationary blade. The adjusting unit is controlled by the control unit, so that the steam pressure for cooling the dynamic and stationary blades becomes higher than the casing pressure. Since this gas turbine combined plant comprises the gas turbine in which the pressure adjusting unit such as a valve, provided downstream of the dynamic and stationary blades, is controlled to adjust the steam pressure for cooling the dynamic and stationary blades, the steam pressure for cooling the dynamic and stationary blades can be controlled with good responsiveness and in a large span of adjustable range. As a result, the steam pressure for cooling the dynamic and stationary blades can be always controlled to be higher than the casing pressure, following the fluctuations of the casing pressure, and a trip of the gas turbine can be suppressed, thereby enabling stable operation. Therefore, since stable operation is possible for the whole plant, even if electric power demand suddenly increases as in the daytime in the midsummer, a trip of the gas turbine does not occur, and electric power can be stably supplied.

The gas turbine combined plant according to still another aspect of the present invention comprisesa gas turbine having at least one hot member that is at high temperature and cooled with steam, the gas turbine exhausting an exhaust gas, a steam generator which generates steam using the exhaust gas, a piping which guides the steam generated by the steam generator to the hot member, a bifurcating flow passage, provided in the piping and downstream of the hot member, that bifurcates the steam, an adjusting unit, provided in the piping and downstream of the hot member, that adjusts an amount of the steam flowing to the bifurcating flow passage, a measuring unit that measures a pressure of the steam in the hot member and a casing pressure of the gas turbine, a control unit that controls the adjusting unit such that the pressure of the steam is maintained higher than the casing pressure based on the pressure of the steam and the casing pressure, and a steam turbine that is driven by the steam generated by the steam generator.

This gas turbine combined plant is a gas turbine combined plant comprising a gas turbine having a steam cooling system, wherein the unit which adjusts the steam pressure for cooling the dynamic and stationary blades, such as a valve, is provided downstream of the dynamic blade or the stationary blade. The adjusting speed of the adjusting unit is determined based on a difference between pressures in the dynamic and stationary blades and in the casing, and the adjusting unit is controlled based on the determined adjusting speed. For example, when the casing pressure has suddenly increased, the casing pressure rapidly approaches the steam pressure for cooling the dynamic and stationary blades, and hence the valve is quickly opened or closed. Therefore, the steam pressure for cooling the dynamic and stationary blades changes quickly. As a result, with respect to an abrupt change of the casing pressure or the like, the steam pressure for cooling the dynamic and stationary blades can be kept higher than the casing pressure. As a result, a trip of the gas turbine can be suppressed, thereby enabling stable operation for the whole plant. Particular, even when the electric power demand abruptly increases, and the load of the gas turbine suddenly increases, the electric power can be stably supplied.

These and other objects, features and advantages of the present invention are specifically set forth in or will become apparent from the following detailed descriptions of the invention when read in conjunction with the accompanying drawings.

## BRIEF DESCRIPTION OF THE DRAWINGS

Fig. 1 is a schematic diagram that shows a cooling system of a gas turbine which uses steam cooling for dynamic and stationary blades, according to a first embodiment of this invention.

Fig. 2 is a partial cross section of the gas turbine according to the first embodiment.

Fig. 3 is a flowchart that shows the control method of gas turbines according to the first embodiment.

Fig. 4 is a block diagram that shows a control unit applicable to this control method.

Fig. 5A and Fig. 5B are explanatory diagrams that shows the relation between the steam pressure for cooling the dynamic blade and the casing pressure.

Fig. 6A and Fig. 6B are explanatory diagrams that shows one example when a margin pressure $\alpha$ is designated as a function.

Fig. 7 is a flowchart of a control method of the gas turbines as a first modification of the control method according to the first embodiment.

Fig. 8 is a block diagram of a control unit on which the control method shown in Fig. 7 can be realized.

Fig. 9 is a flowchart of a control method of the gas turbines as a second modification of the control method according to the first embodiment.

Fig. 10 is a block diagram of a control unit on which the control method shown in Fig. 9 can be realized.

Fig. 11A and Fig. 11B are flowcharts that show the control method.

Fig. 12 is an explanatory diagram that shows one example of a control method of gas turbines according to the first embodiment.

Fig. 13 is a schematic diagram that shows a cooling system of a gas turbine which uses steam cooling for dynamic and stationary blades, according to a second embodiment of this invention.

Fig. 14 is an explanatory diagram that shows one example in which the gas turbine according to this invention is applied to a gas turbine combined electric generating plant.

Fig. 15 is a partial cross section of a gas turbine in which steam cooling is applied for dynamic and stationary blades.

Fig. 16 is a schematic diagram that shows a gas turbine combined plant adopting steam cooling for hot sections.

## DETAILED DESCRIPTIONS

Embodiments of the present invention are explained in detail below, with reference to the drawings, but the present invention is not limited by those embodiments. The components in the following embodiments should include components that are easily assumed by those skilled in the art.

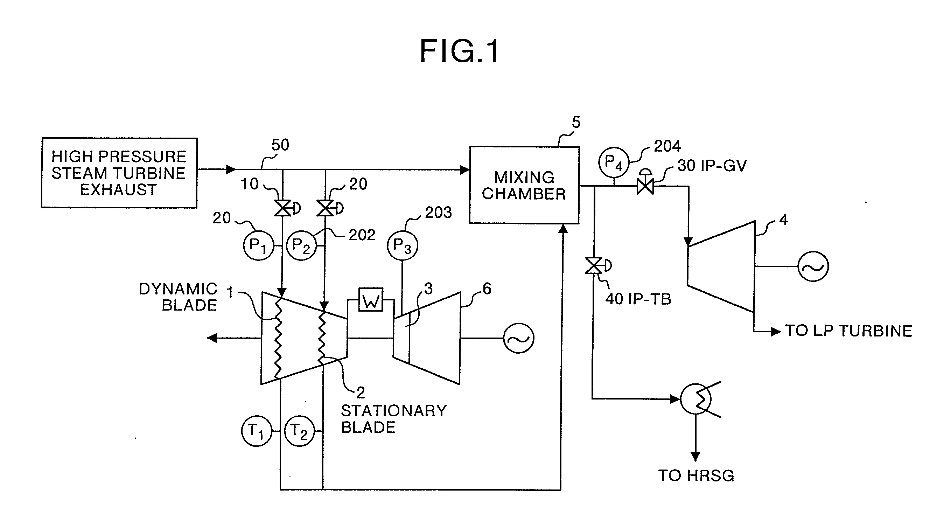

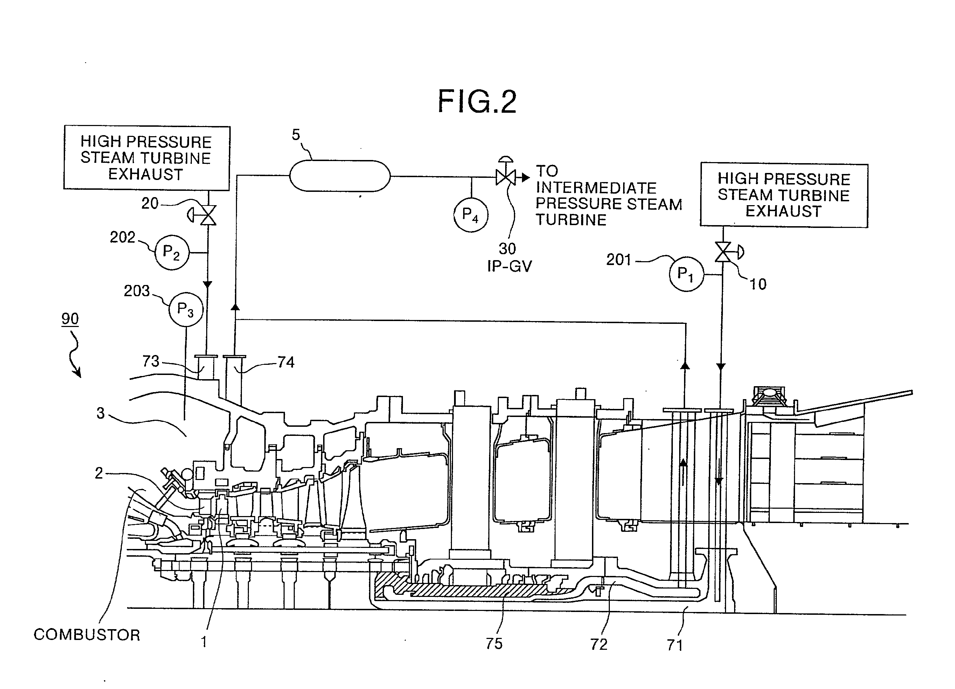

Fig. 1 is a schematic diagram that shows a cooling system of a gas turbine which uses steam cooling for dynamic and stationary blades, according to a first embodiment of this invention. Fig. 2 is a partial cross section of the gas turbine according to the first embodiment. This gas turbine has a feature in that the cooling steam pressure at the inlet of the dynamic and stationary blades is kept higher than a pressure in a casing. The hot members of the gas turbine include the combustor tail pipe, the turbine main spindle or the rotor disk in addition to the dynamic blade and the stationary blade, but particularly, it is effective if this invention is applied to cooling of the dynamic blade, the stationary blade or the combustor tail pipe.

In this gas turbine, exhaust steam from a high pressure steam turbine (not shown) driven by high-pressure steam supplied from the HRSG is used as a coolant for the dynamic and stationary blades. The steam used as the coolant is not limited to the exhaust steam from the high pressure steam turbine. For example, high-pressure steam supplied form an HP-SH (High Pressure Super Heater) equipped in the HRSG may be used. At the time of startup of the gas turbine, sufficient steam used for driving the high pressure steam turbine cannot be obtained. In such a case, auxiliary steam produced by a spare steam generator installed in a plant or the like can be used. The same applies to the following embodiments.

The exhaust steam from the high pressure steam turbine (not shown) is flow-adjusted by a steam flow rate adjusting valve for dynamic blade 10 and a steam flow rate adjusting valve for stationary blade 20. As shown in Fig. 2, the steam supplied to the dynamic blade 1 is supplied to a cooling flow passage provided inside thereof, through a steam supply flow passage 71 provided in a turbine main spindle 75, and the steam supplied to the stationary blade 2 is supplied to a cooling flow passage provided inside thereof, through a steam supply port 73.

The steam supplied to the dynamic blade 1 is heat-exchanged with the wall surface in the cooling flow passage inside of the dynamic blade 1 and the stationary blade 2, and exhausted outside of the dynamic blade 1 and the stationary blade 2. At this time, the steam having cooled the dynamic blade 1 passes through a steam recovery flow passage 72 provided in the turbine main spindle 75, and the steam having cooled the stationary blade 2 passes through a steam recovery port 74, to be taken out of the gas turbine 90, respectively, and then these steams are guided to a mixing chamber 5. The steam after cooling may be guided to a reheater (not shown) provided in the HRSG, instead of the mixing chamber 5, and thermal energy of the exhaust gas of the gas turbine may be added thereto, to be supplied to the intermediate pressure steam turbine.

The cooling steam guided to the mixing chamber 5 is mixed with the steam for cooling the combustor tail pipe (not shown) and the exhaust steam of the high pressure steam turbine. The mixed steam is pressure-adjusted by at least one of the IP-GV 30 (Intermediate pressure-Governor) and the IP-TB 40 (Intermediate pressure-Turbine Bypass), being a steam pressure adjusting unit, and then supplied to an intermediate pressure steam turbine 4 (see Fig. 1), to drive it. Instead of the intermediate pressure steam turbine 4, a low pressure steam turbine (not shown) may be driven.

An example in which the load of the gas turbine changes from a certain value to a higher value shall be considered. If the load of the gas turbine increases, to generate an output corresponding to the increased load, much fuel is burnt to generate higher thermal energy, to thereby correspond to the increase of the output. At this time, much fuel is supplied to the combustor of the gas turbine, and an amount of air supplied for combustion also increases by the amount of increase of the supplied fuel. That is to say, when the fuel supplied to the combustor is increased, the amount of air supplied to the compressor (see Fig. 1) also increases, and the casing pressure $P_3$, being an air pressure in the casing 3, increases corresponding thereto.

The heat capacity of the steam supply system constituted of the high pressure steam turbine which supplies cooling steam to the dynamic blade 1 and the stationary blade 2, and the HRSG which supplies steam to the high pressure steam turbine is large, as compared to the gas turbine. Therefore, even if the output of the gas turbine rises to increase the thermal energy of the exhaust gas input to the HRSG, the steam flow supplied from the HRSG does not increase immediately. Therefore, the volume of cooling steam supplied from the HRSG starts to increase after the load of the gas turbine has increased and a certain period of time has passed. In this manner, in the gas turbine combined plant, the time required until the steam flow supplied to the dynamic blade 1 and the stationary blade 2 increases is delayed than the time when the casing pressure starts to increase. As a result, when the load of the gas turbine increases, the casing pressure $P_3$ becomes larger than the steam pressure $P_1$ in the dynamic blade and the steam pressure $P_2$ in the stationary blade. In this state, the combustion gas flows backward from a film cooling hole provided in the dynamic blade 1 and the stationary blade 2 to the internal cooling flow passage, to thereby increase the temperatures of the dynamic and stationary blades. As a result, a trip, that is, suspension of the gas turbine occurs.

When steam leakage occurs in a steam supply pipe 50 (see Fig. 1) which supplies steam to the dynamic blade 1 and the like, or the steam supply pipe 50 is blocked, the steam flow supplied to the dynamic blade 1 decreases, thereby the steam pressure $P_1$ of the dynamic blade drops. If $P_1$ drops and becomes lower than the casing pressure $P_3$, the combustion gas may flow backward into the cooling flow passage provided in the dynamic blade 1 and the stationary blade 2 to cause overheat of the dynamic and stationary blades, thereby causing a trip of the gas turbine.

To prevent such a trip of the gas turbine, it is necessary to control the casing pressure $P_3$ to be lower than the steam pressure $P_1$ of the dynamic blade and the steam pressure $P_2$ of the stationary blade. Conventionally, for this control, an attempt has been made to control so that casing pressure $P_3$ becomes lower than

the steam pressures of the dynamic and stationary blades, by opening or closing the steam flow rate adjusting valve 10 for dynamic blade and the steam flow rate adjusting valve 20 for stationary blade, provided upstream of the dynamic and stationary blades. However, since the steam pressure $P_1$ of the dynamic blade and the steampressure $P_2$ of the stationary blade are governed by the steam pressure downstream of these, the steam pressure cannot be controlled sufficiently with this method. Further, a certain period of time is required until the steam flow generated from the HRSG increases, after the heated amount by the exhaust gas of the gas turbine has increased. Therefore, sufficient steam flow for increasing the steam pressure $P_1$ of the dynamic blade and the steam pressure $P_2$ of the stationary blade cannot be ensured, with an increase of the casing pressure $P_3$.

In the gas turbine according to the first embodiment, when the casing pressure $P_3$ increases due to an increase of the load; the IP-GV 30 or the IP-TB 40, being the steam pressure adjusting unit provided downstream of the dynamic and stationary blades, is closed, to thereby increase the steam pressure $P_1$ of the dynamic blade 1 and the steam pressure $P_2$ of the stationary blade 2. As described above, since the inlet steam pressure of the dynamic and stationary blades is controlled downstream of the dynamic and stationary blades, the steam pressure for cooling the dynamic and stationary blades can be quickly controlled, without being affected by the response of the steam supply system, such as the HRSG having a large heat capacity which exists upstream of the dynamic and stationary blades and the high pressure steam turbine. As a result, overheat of the dynamic and stationary blades can be suppressed to suppress a trip of the gas turbine, thereby enabling stable operation.

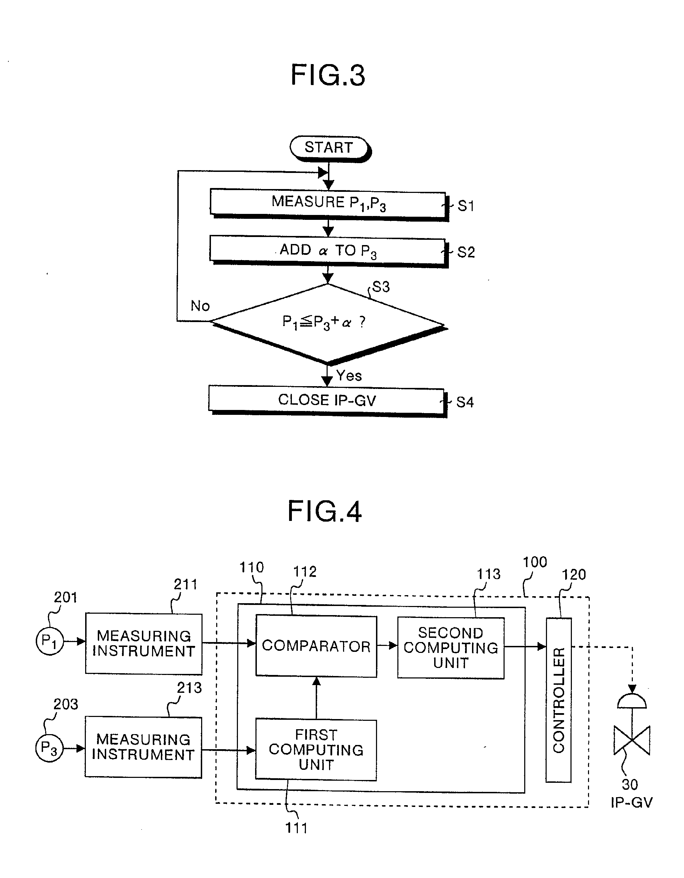

The method of controlling the cooling steam pressure in the apparatus of the gas turbine is explained. For brevity of explanation, the control of the cooling steam pressure $P_1$ in the dynamic blade 1 is explained below, but the control of the cooling steam pressure $P_2$ in the stationary blade is performed in the same manner. Fig. 3 is a flowchart that shows the control method of gas turbines according to the first embodiment. Fig. 4 is a block diagram that shows a control unit applicable to this control method.

If it is controlled so that the cooling steam pressure $P_1$ in the dynamic blade 1 becomes larger than the casing pressure $P_3$, the backflow of the combustion gas does not occur theoretically. However, in this gas turbine, the steam pressure $P_1$ in the dynamic blade 1 is controlled so as to be a pressure value higher than a value obtained by adding a margin pressure $\alpha$ to the casing pressure $P_3$. The reason is described later. Since the control is carried out in this manner, the pressure $\alpha$ is added to the casing pressure by a first computing unit 111 provided in a processor 110 of a control unit 100.

The cooling steam pressure $P_1$ in the dynamic blade 1 and the casing pressure $P_3$ are measured by pressure gauges 201 and 203 (step S1), respectively. These measured values are taken into measuring instruments 211 and 212, respectively, converted into electric signals, and sent to the processor 110 in the control unit 100. The pressure $\alpha$ is added to the casing pressure $P_3$ in advance by the first computing unit in the processor 110 (step S2). Thereafter, the casing pressure $P_3$ and the cooling steam pressure $P_1$ in the dynamic blade 1 are compared by a comparator 112 (step S3).

When the comparison result of the comparator 112 becomes $P_1 \leq P_3 + \alpha$, a second computing unit 113 sends a control signal to a controller 120, in response to the result, and the controller 120, being a control section, closes the IP-GV 30, being a pressure adjusting unit, based on the control signal (step S4). The flow rate of the cooling steam flowing into the intermediate pressure steam turbine 4 decreases, to increase the cooling steam pressure $P_1$ in the dynamic blade. As a result, the cooling steam pressure $P_1$ in the dynamic blade becomes larger than $P_3 + \alpha$, thereby the combustion gas can be prevented from flowing backward into the dynamic blade.

When there is pulsation in the casing pressure $P_3$ or the like, in some cases, though $P_1 > P_3 + \alpha$ is maintained in average, it becomes $P_1 \leq P_3 + \alpha$ momentarily, and then becomes $P_1 > P_3 + \alpha$ in a next moment. In such a case, if the control is carried out so as to close the IP-GV 30, the opening and closing signals for the IP-GV are input intermittently with a short cycle, and hence the IP-GV 30 may cause hunting. To suppress this phenomenon, for example, the control may be carried out so as to close the IP-GV 30, when the situation of $P_1 \leq P_3 + \alpha$ occurs three times continuously. By doing such a control, the influence of pulsation in the casing pressure $P_3$ or the like can be excluded, to suppress hunting of the IP-GV 30, thereby enabling stable control.

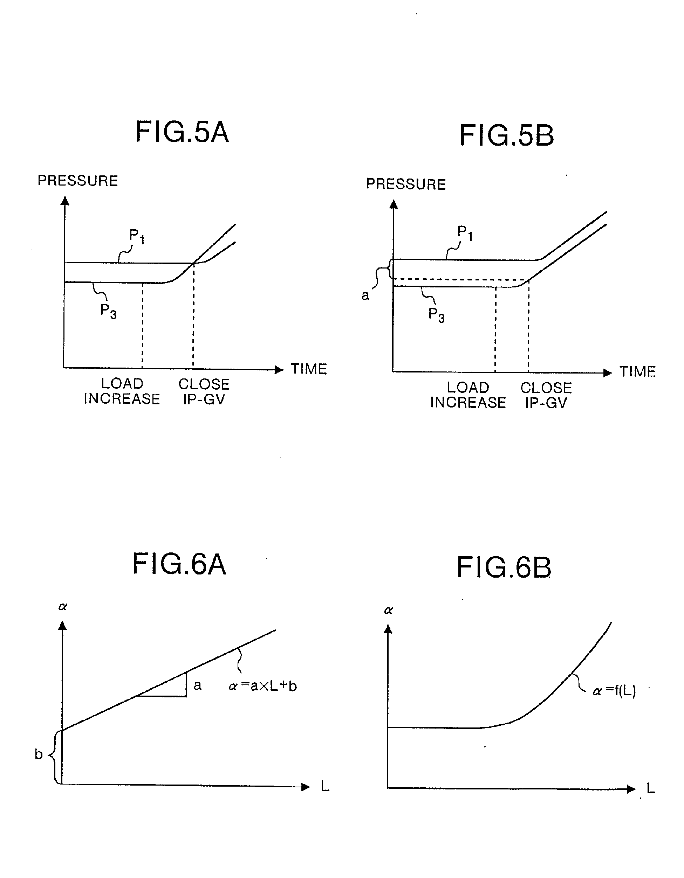

The reason why the pressure $\alpha$ is added to the casing pressure $P_3$ is explained here. Fig. 5A and Fig. 5B are explanatory diagrams that shows the relation between the steam pressure for cooling the dynamic blade and the casing pressure. Since the dynamic blade 1 and the IP-GV 30 are connected by a long pipe, the cooling steam pressure $P_1$ in the dynamic blade 1 does not increase immediately even if the IP-GV 30 is closed. That is to say, even if the IP-GV 30 is closed with an increase of the casing pressure $P_3$, a certain period of time is required until the pressure $P_1$ actually starts to increase. Therefore, as shown in Fig. 5A, the casing pressure $P_3$ may exceed the cooling steam pressure $P_1$ in the dynamic blade 1. In this case, the gas turbine may cause a trip, and hence to prevent such a situation, the pressure $\alpha$ is added to the casing pressure $P_3$ as a margin in advance. By doing such a control, as shown in Fig. 5B, even if a certain period of time is required until the cooling steam pressure $P_1$ in the dynamic blade 1 starts to increase, such a control is carried out that the $P_1$ is

to be increased when $P_1$ becomes equal to $P_3 + \alpha$. In this manner, $P_1$ starts to increase before the casing pressure $P_3$ exceeds the cooling steam pressure $P_1$ in the dynamic blade 1, and hence the cooling steam pressure $P_1$ in the dynamic blade 1 can be always maintained higher than the casing pressure $P_3$. However, if the value of the margin pressure $\alpha$ is small, the casing pressure $P_3$ may exceed the cooling steam pressure $P_1$ in the dynamic blade 1. Hence, it is necessary to set the margin pressure $\alpha$ to an optimum value, corresponding to the specification or the like of the gas turbine.

The $\alpha$ may be a constant, or a certain function f(x') may be used. When the constant is to be used, for example, it is desired to set $\alpha$ = 0.15 to 0.30 MPa. Alternatively, $\alpha$ may be a function of the load of the gas turbine. Fig. 6A and Fig. 6B are explanatory diagrams that shows one example when the margin pressure $\alpha$ is designated as a function. As for such a function, for example, as shown in Fig. 6A, a function $\alpha$ = a $\times$ L + b (a and b are a constant, respectively) may be used, wherein $\alpha$ increases with an increase of the load L. By using such a function, the IP-GV 30 (see Fig. 1) can be opened for a period as long as possible, when the load is small and the casing pressure $P_3$ does not increase suddenly. As a result, much steam can be supplied to the intermediate pressure steam turbine 4 (see Fig. 1), and hence much work can be taken out from the intermediate pressure steam turbine 4, corresponding thereto.

When the load of the gas turbine has increased and the casing pressure $P_3$ has increased suddenly, the margin pressure $\alpha$ is set large. Thereby, the IP-GV 30 (see Fig. 1) can be closed at an earlier period to increase the cooling steam pressure $P_1$ in the dynamic blade, and hence the combustion gas can be prevented from flowing backward into the dynamic blade 1. As shown in Fig. 6B, $\alpha$ may be set as a nonlinear function of the load L, $\alpha$ = f(L), so that the value $\alpha$ is raised suddenly at a certain load. Further, $\alpha$ is not limited to a function of the load L, but may be a function of temperature of the dynamic blade 1 or a function of feed rate of the fuel. This is effective when the load cannot be measured directly. A delay exists after the fuel has been supplied until the load is increased, but if the fuel feed rate is designated as a control parameter, this delay can be ignored. It is preferable since the steam pressure for cooling the dynamic blade can be adjusted more quickly. Further, the control of the cooling steam pressure $P_1$ may be carried out so as to maintain the pressure ratio between the cooling steam pressure $P_1$ and the casing pressure $P_3$ at a constant, so that the cooling steam pressure $P_1$ in the dynamic blade 1 becomes higher than the casing pressure $P_3$. The pressure ratio is preferably about from 1.1 to 2.0, in view of stable control.

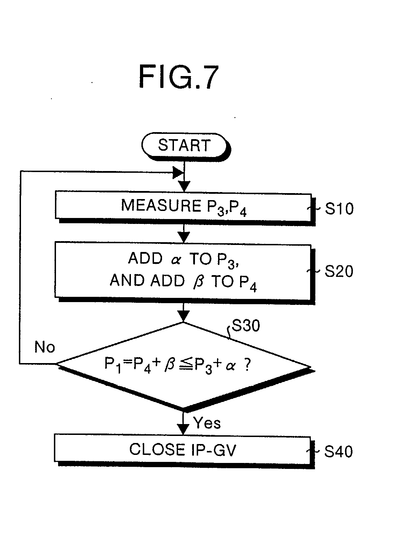

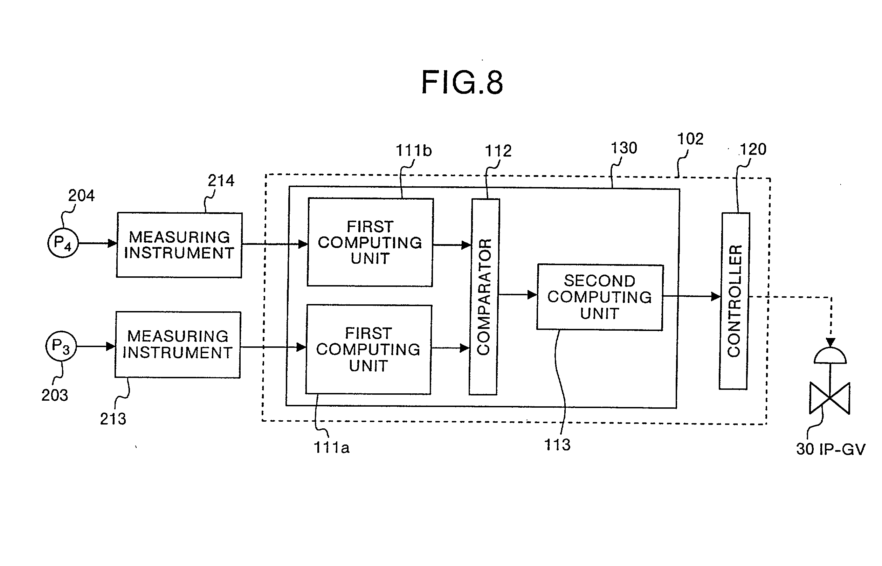

Fig. 7 is a flowchart of a control method of the gas turbines as a first modification of the control method according to the first embodiment. Fig. 8 is a block diagram of a control unit on which the control method shown in Fig. 7 can be realized. In this control method, the cooling steam pressure $P_1$ in the dynamic blade 1 has been measured by a pressure gauge 201 provided at the inlet of the dynamic blade 1 (see Fig. 1 to Fig. 3). However, it is preferable to measure the parameter used for the control close to a control unit which actually controls the object, in view of more precise control having high responsiveness. Since the pressure gauge 201 installed upstream of the dynamic blade 1 is installed at a place away from the IP-GV 30 which actually controls the pressure of the cooling steam, if the measured value of the pressure gauge 201 is used, the accuracy of the control may slightly decrease. Therefore, it is desired to use an inlet pressure $P_4$ of the IP-GV 30 measured by a pressure gauge 204 (see Fig. 1), than using the measured value $P_1$ of the pressure gauge 201, for this control. To increase the accuracy of the control, it is desired to provide the pressure gauge 204 upstream of the IP-GV 30 and as close to the IP-GV 30 as possible.

In this control method, since the piping from the dynamic blade 1 to the pressure gauge 204 is long, $P_4$ becomes smaller than $P_1$ due to a pressure loss. Therefore, when the measured value $P_4$ of the pressure gauge 204 is used as the cooling steam pressure $P_1$ in the dynamic blade 1, it is necessary to correct the measured value $P_4$ by adding this pressure loss to $P_4$ or the like. Therefore, The cooling steam pressure $P_1$ and the casing pressure $P_3$ are measured (step S10), the measured value of the pressure gauge 204 is converted to an electric signal by a measuring instrument 214, and a pressure $\beta$ is added thereto in view of the pressure loss, by a first computing unit 111b (step S20). $P_4 + \beta$ is replaced by the cooling steam pressure $P_1$ in the dynamic blade 1, and compared with the casing pressure $P_3$, in a comparator 112 in a processor 130 equipped in a control unit 102 (step S30). When the comparison result is $P_1 = P_4 + \beta \leq P_3 + \alpha$, a control signal is sent from a second computing unit 113 to the controller 120, being the control section, and the controller controls the IP-GV 30 (see Fig. 1) to be closed (step S40). By carrying out such a control, the cooling steam pressure $P_1$ in the dynamic blade 1 can be controlled, using the pressure $P_4$ in the vicinity of the IP-GV 30 which actually controls the pressure, as a parameter, and hence the accuracy of control can be increased.

The processor 130 and the like may be realized by special-purpose hardware, and the processor 130 and the like may be constituted of a memory and a CPU (Central Processing Unit), and a program for realizing the function of the processor may be loaded to the memory and execute the program, to thereby realize the function thereof. This program may be for realizing a part of the above-described function, or the above-described function may be realized in combination with a program already stored in a computer system.

The control unit 102 or the like of the gas turbine may be one which realizes the function thereof by loading an input unit and a display device (either of these is not shown) as peripheral equipment and executing these. In this case, the input unit and the display device (either of these is not shown) are connected as peripheral equipment to the control unit 102. Here, the input unit stands for input devices such as a keyboard and a mouse. The display device may be a CRT (Cathode Ray Tube) or a liquid crystal display device.

A second modification of the control method according to the first embodiment will now be explained. In the gas turbine according to the first embodiment, since the cooling steam pressure is controlled downstream of the dynamic and stationary blades, the response of the cooling steam pressure becomes considerably fast, as compared with the case such that the cooling steam pressure is controlled upstream of the dynamic and stationary blades. However, the size of the gas turbine itself is large, and for convenience sake of arranging individual equipment, the IP-GV 30 which controls the steam pressure for cooling the dynamic and stationary blades is arranged at a position away from the dynamic and stationary blades. Therefore, even if the cooling steam pressure is controlled downstream of the dynamic and stationary blades, a delay of response occurring between opening or closing of the IP-GV and a change in the steam pressure for cooling the dynamic blade and the like cannot be excluded completely.

As a result, in the gas turbine according to the first embodiment, when a change in the casing pressure that exceeds the margin pressure $\alpha$ occurs within a short period of time, the pressure change of the cooling steam may not be able to follow this change. The casing pressure may exceed the steam pressure for cooling the dynamic and stationary blades within a short period of time, thereby causing a trip of the gas turbine. To solve such a problem, the margin pressure $\alpha$ should be increased. However, it cannot be increased excessively, because of the relation between the casing pressure and the cooling steam pressure.

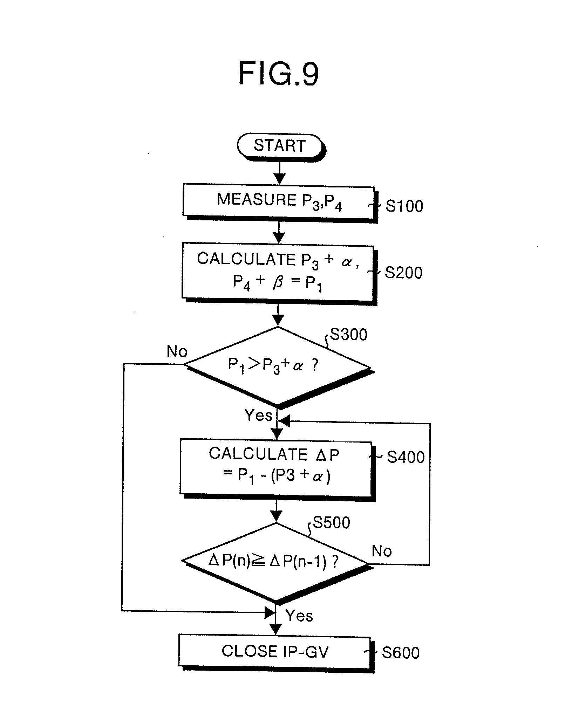

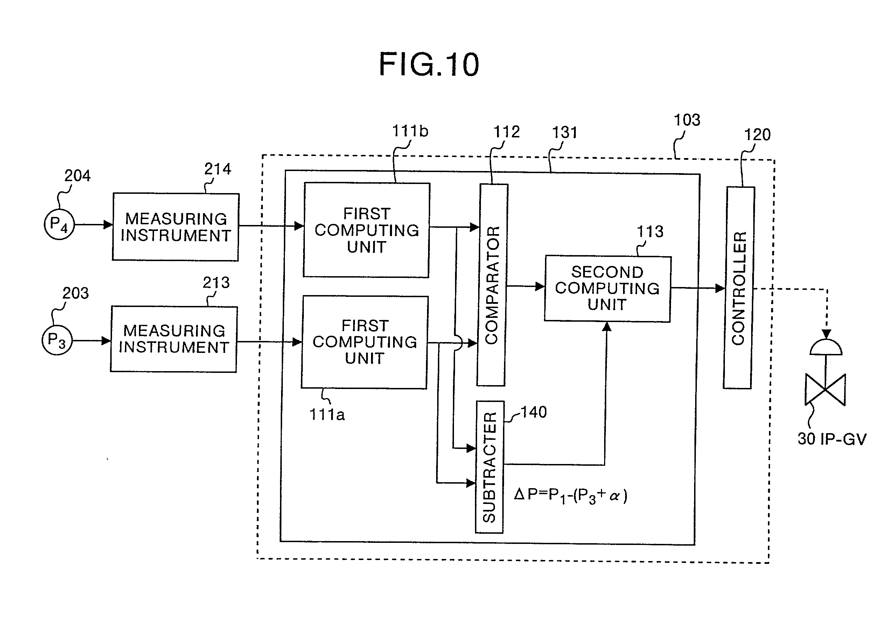

The gas turbine according to the second modificationsolves such a problem. The characteristic feature of this gas turbine is that opening and closing of the IP-GV is controlled by using a rate of change of the casing pressure $P_3$ and the pressure $P_1$ of the dynamic blade as a parameter. Fig. 9 is a flowchart of a control method of a gas turbine according to the second modification of the first embodiment. Fig. 10 is a block diagram of a control unit on which the control method shown in Fig. 9 can be realized. The control unit 103 comprises a computing section 131 and a controller 121 which is a control section. Here is explained an example in which opening and closing of the IP-GV is controlled by using change tendency of $\Delta P$, which is a differential pressure between the cooling steam pressure $P_1$ of the dynamic blade 1 and the casing pressure $P_3$, as a parameter of rate of change.

In the second modification, the pressure $P_4$ close to and upstream of the IP-GV 30 is measured as described above, and a correction value $\beta$ is added thereto and the addition result is designated as the cool-

ing steam pressure $P_1$ of the dynamic blade 1, to accurately control the pressure of the cooling steam. The casing pressure $P_3$ and the pressure $P_4$ close to and upstream of the IP-GV 30 are measured respectively by the pressure gauges 203 and 204 shown in Fig. 1 (step S100). These measured values are converted to electric signals by the measuring instruments 213 and 214, respectively, and taken into the control unit 103. The sampling cycle at this time can be properly set according to the size or the like of the plant, but in this example, $P_4$ and $P_3$ are measured at an interval of 100 ms.

The $P_3$ and $P_4$ which are taken into the control unit 103 are respectively added with the margin pressure $\alpha$ and the correction value $\beta$, and replaced by $P_4 + \beta = P_1$ by first computing units 111a and 111b (step S200). $P_1$ and $P_3 + \alpha$ are then compared by the comparator 112 (step S300). When this result is $P_1 > P_3 + \alpha$, control proceeds to the next step. If not, the cooling steam pressure $P_1$ in the dynamic blade may become lower than the casing pressure $P_3$. Therefore, in this case, a control signal is sent from the second computing unit 113 to the controller 121, and control shifts to a control in which the controller 121 closes the IP-GV 30 to increase the steam pressure for cooling the dynamic blade (step S6).

When the comparison result by the comparator 112 is $P_1 > P_3 + \alpha$, a differential pressure $\Delta P = P_1 - P_3$ is calculated by a subtracter 140 (step S400). Based on the $\Delta P$ calculated here, the current $\Delta P(n)$ and $\Delta P(n-1)$ one before are compared by the second computing unit 113. If $\Delta P(n) > \Delta P(n-1)$, it is judged that the differential pressure $\Delta P$ has a decreasing tendency (step S500).

Taking noise at the time of measurement into consideration, not only the comparison with the measured value one before, but also the change tendency of $\Delta P$ may be judged by a comparison between previous measured values. For example, by using measured values $\Delta P(n-2)$ and $\Delta P(n-3)$, which are measured values two before and three before, when $\Delta P(n) > \Delta P(n-1)$, $\Delta P(n-1) > \Delta P(n-2)$ and $\Delta P(n-2) > \Delta P(n-3)$ are realized at the same time, it may be judged that the differential pressure $\Delta P$ has a decreasing tendency. In this manner, judgment is hardly affected by the noise, as compared with the case such that the comparison is carried out with only the measured value one before, and hence hunting of the IP-GV 30 can be suppressed, thereby enabling stable control.

As a result of judgment, when it is judged that the differential pressure $\Delta P$ has a decreasing tendency, a control signal is sent from the second computing unit 113 to the controller 1.21, and the controller 121 carries out control so that the IP-GV 30 is closed, in response to this control signal (step S600). The IP-GV 30 is closed, and as a result, the cooling steam pressure $P_1$ in the dynamic blade starts to rise. In this manner, by closing the IP-GV when the differential pressure $\Delta P$ changes to a decreasing tendency, $P_1$ can be started to rise before the casing pressure $P_3$ exceeds the cooling

steam pressure $P_1$ in the dynamic blade, and hence a trip of the gas turbine can be prevented, thereby enabling stable operation. Further, even if the margin pressure is not set large, quick control becomes possible. Since overheat of hot members such as the dynamic and stationary blades can be suppressed, a damage of these members can be suppressed, and the life thereof can be extended.

The computing section 131 may be realized by special-purpose hardware, and the computing section 131 may be constituted of a memory and a CPU (Central Processing Unit), and a program for realizing the function of the processor may be loaded to the memory and execute the program, to thereby realize the function thereof. This program may be for realizing a part of the above-described function, or the above-described function may be realized in combination with a program already stored in a computer system.

The control unit 103 of the gas turbine may be one which realizes the function thereof by loading an input unit and a display device (either of these is not shown) as peripheral equipment and executing these. In this case, the input unit and the display device (either of these is not shown) are connected as peripheral equipment to the control unit 103. Here, the input unit stands for input devices such as a keyboard and a mouse. The display device stands for CRT (Cathode Ray Tube) and a liquid crystal display device.

In this control, if the rate of change, at which the differential pressure $\Delta P$ decreases, exceeds a certain set value, the opening and closing speed of the IP-GV 30 may be increased, and the opening and closing degree thereof may be increased. To increase the opening and closing speed and the opening and closing degree of the IP-GV 30, for example, when a PID controller is used for the controller 121, the proportional gain has only to be increased. In this manner, for example, when the casing pressure $P_3$ has suddenly increased due to an abrupt change of the load, since the IP-GV 30 can be quickly and largely closed, the cooling steam pressure $P_1$ in the dynamic blade 1 can be quickly increased. As a result, the cooling steam pressure $P_1$ in the dynamic blade 1 increases more quickly than the increase of the casing pressure $P_3$, and hence a trip of the gas turbine can be prevented, with respect to an abrupt change in the load. When the change in the casing pressure is gradual, the opening and closing speed and the opening and closing degree of the IP-GV 30 are controlled to be small, and hence hunting of the IP-GV can be suppressed, thereby enabling stable control.

Particularly, when the dynamic blade cooling flow passage is punctured during the load is increasing, and the cooling steam pressure $P_1$ in the dynamic blade 1 decreases, and on the other hand, the casing pressure $P_3$ is increasing with the increase of the load, $P_3$ may exceed $P_1$ quickly, and a trip of the gas turbine may be caused. According to this control logic, even under such a condition, a trip of the gas turbine can be prevented, enabling stable operation. Therefore, it is very effective. Since the cooling steam pressure $P_1$ in the dynamic blade 1 is controlled depending on the change tendency of the differential pressure $\Delta P$, the influence of pulsation in the casing pressure $P_3$ or the like can be excluded, by setting the sampling frequency of $P_1$ and $P_3$ to a proper value, or by judging the change tendency, going back to the past measured values. By excluding the influence of pulsation, hunting of the IP-GV 30 can be suppressed, thereby enabling stable operation of the gas turbine.

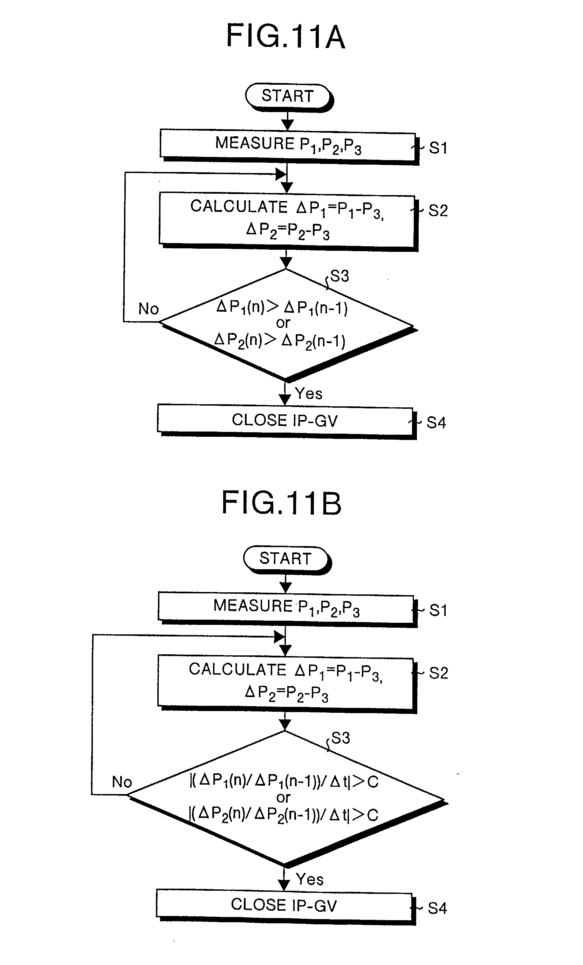

In the above explanation, the casing pressure $P_3$ and the cooling steam pressure $P_1$ in the dynamic blade 1 have been compared, but the cooling steam pressure $P_2$ in the stationary blade 2 can be controlled in the same manner. A change between the differential pressure $\Delta P_1$ between the cooling steam pressure $P_1$ in the dynamic blade 1 and the casing pressure $P_3$, and the differential pressure $\Delta P_2$ between the cooling steam pressure $P_1$ in the stationary blade 2 and the casing pressure $P_3$ may be compared, and when either of $\Delta P_1$ and $\Delta P_2$ shows a decreasing tendency, the IP-GV 30 may be closed. Fig. 11A and Fig. 11B are flowcharts that show this control method. In this manner, the cooling steam pressure is controlled corresponding to the cooling steam pressure of the dynamic blade 1 or the stationary blade 2, either of which approaches the casing pressure $P_3$ more quickly. As a result, a trip of the gas turbine can be prevented more reliably.

In addition to the above control, when either one of the rates of change of the differential pressure $\Delta P_1$ and differential pressure $\Delta P_2$ exceeds a set value, the IP-GV 30 may be quickly and largely opened or closed. Fig. 11B is a flowchart that shows this control method. The rate of change of differential pressure $\Delta P$ can be obtained, for example, using

$$(\Delta P(n) - \Delta P(n-1))/\Delta t,$$

where $\Delta t$ is a sampling cycle, and has time dimension. In this manner, even if either one value of the cooling steam pressures in the dynamic blade 1 and the stationary blade 2 suddenly approaches the value of the casing pressure, the cooling steam pressure can be controlled corresponding to the one having a larger rate of change. As a result, a trip of the gas turbine can be prevented more reliably.

In the cooling system diagram shown in Fig. 1, the cooling steam pressure $P_1$ in the dynamic blade 1 and the cooling steam pressure $P_2$ in the stationary blade 2 are controlled by the IP-GV 30. However, the dynamic blade 1 and the stationary blade 2 may have a separate piping and may be controlled separately. By such a configuration, $P_1$ and $P_2$ can be separately controlled, thereby enabling more precise control. As a result, waste of the cooling steam can be suppressed, and more steam can be fed into the intermediate pressure steam turbine 4.

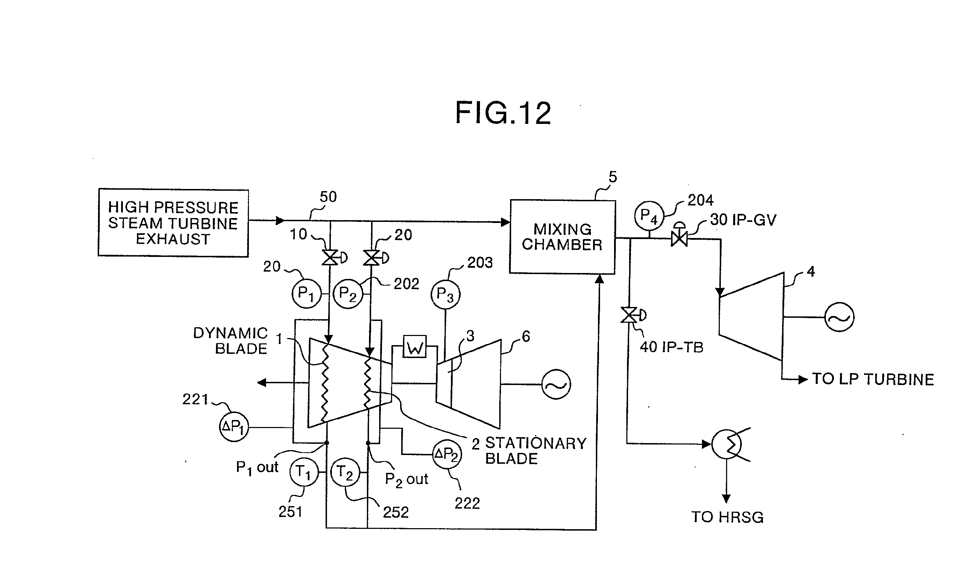

Fig. 12 is an explanatory diagram that shows one example of a control method of gas turbines according to the first embodiment. This gas turbine has a feature in that the flow rate of the cooling steam flowing into the dynamic and stationary blades is ensured in a certain quantity, while controlling such that the casing pressure does not exceed the steam pressure for cooling the dynamic and stationary blades. In the above control, it is controlled such that the steam pressure for cooling the dynamic and stationary blades is always kept higher than the casing pressure, thereby the combustion gas is prevented from flowing backward into the internal cooling flow passage in the dynamic and stationary blades, and a trip of the gas turbine is suppressed.

However, if the flow rate of the steam for cooling the dynamic and stationary blades is not sufficiently ensured, the heat of the dynamic and stationary blades cannot be sufficiently shifted outside of the dynamic and stationary blades. As a result, the dynamic and stationary blades overheat, causing a trip of the gas turbine. Therefore, in this modified example, control is carried out such that a flow rate of the steam necessary for cooling is ensured, while keeping the steam pressure for cooling the dynamic and stationary blades higher than the casing pressure.

In the cooling steam supply flow passage according to this modified example, steam flow rate adjusting valves for dynamic and stationary blades 10 and 20, which adjust the flow rate of the cooling steam, are provided upstream of the dynamic blade 1 and the stationary blade 2. Further, differential pressure gauges 221 and 222 are respectively provided for measuring a differential pressure between the upstream and the downstream of the dynamic blade 1 and the stationary blade 2. In this modified example, the flow rate of the cooling steam is obtained from the differential pressure, and the steam temperature which is a parameter necessary for conversion is also measured by thermometers 251 and 252. The differential pressure $\Delta P_1 x$ and $\Delta P_2 x$ are obtained from $P_1 - P_1out$ and $P_2 - P_2out$. The flow rate Q1 becomes,

$$Q = B \times \sqrt{((2 \times g \times \Delta P_n x)/\rho)},$$

where g denotes gravity acceleration and $\rho$ denotes density of the steam. B denotes a flow coefficient, which depends on the viscosity of the cooling steam, the shape of the cooling flow passage in the dynamic blade and the like.

In this gas turbine, while it is controlled such that $P_1 > P_3 + \alpha$ and $P_2 > P_2 + \alpha$ are both realized, the flow rate $Q_n$ that flows in the dynamic blade 1 and the stationary blade 2 is controlled to a predetermined flow rate by the steam flow rate adjusting valves for dynamic and stationary blades 10 and 20. For example, if the casing pressure $P_3$ increases, with an increase of the load, the IP-GV30 is closed to increase the cooling steam

pressure $P_1$ in the dynamic blade and the cooling steam pressure $P_2$ in the stationary blade. At this time, since the cooling steam pressure $P_1out$ and $P_2out$ at the outlet of the dynamic blade also increase, the differential pressure $\Delta P_n x$ decreases, and as a result, the flow rate $Q_1$ and $Q_2$ flowing in the dynamic blade 1 and the stationary blade 2 decrease. Therefore, control is carried out so that the steam flow rate adjusting valves for dynamic and stationary blades 10 and 20 are opened to flow the cooling steam so that a predetermined flow rate $Q_n$ is ensured. In the gas turbine to which the control logic according to this modification example is applied, the flow rat of steam required for cooling the dynamic and stationary blades can be ensured, while controlling such that the cooling steam pressures in the dynamic and stationary blades become higher than the casing pressure. As a result, even if there is a change in the load, a trip of the gas turbine can be suppressed, enabling stable operation.

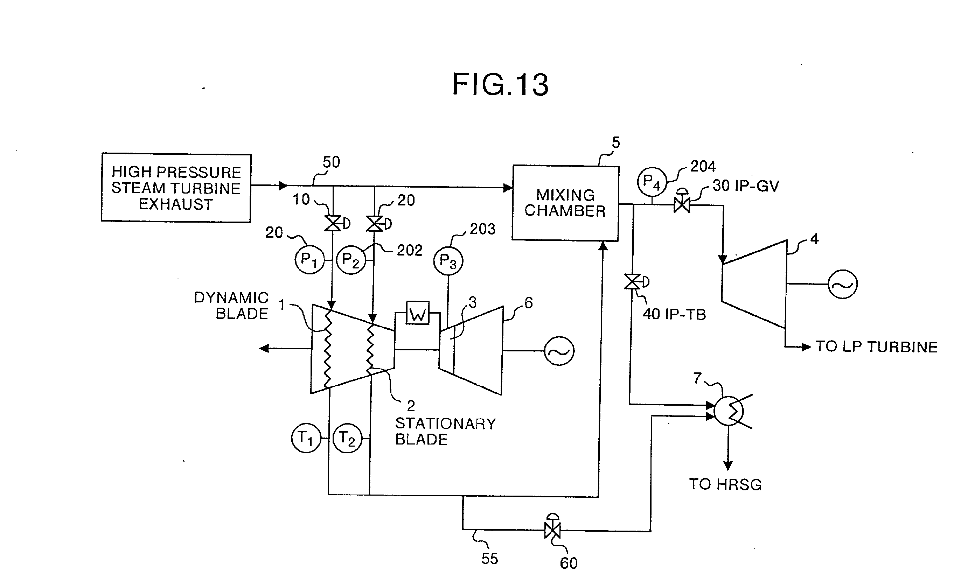

Fig. 13 is a schematic diagram that shows a cooling system of a gas turbine which uses steam cooling for dynamic and stationary blades, according to a second embodiment of this invention. This gas turbine has a feature in that a bifurcating flow passage which bifurcates the cooling steam is provided between the dynamic and stationary blades and the IP-GV, being a steam pressure adjusting unit, and the steam pressure for cooling the dynamic and stationary blades is controlled by letting the steam flow to this bifurcating flowpassage. As shown in Fig. 12, a bifurcating flow passage 55 for letting the cooling steam, which have cooled the dynamic blade 1 and the stationary blade 2, flow to the steam condenser 7 is provided downstream of the dynamic blade 1 and the stationary blade 2. This bifurcating flow passage 55 is provided with a pressure adjusting valve 60, being a steam pressure adjusting unit, and by opening or closing this pressure adjusting valve 60, the steam pressure for cooling the dynamic and stationary blades is adjusted. The steam which is made to flow to the bifurcating flow passage 55 is guided to the steam condenser 7 to be recovered to the water form, and then supplied again to the HRSG and becomes steam again.

In the gas turbine according to the second embodiment, since the pressure of the cooling steam can be adjusted near the dynamic and stationary blades, the pressure of the cooling steam can be controlled at a response speed faster than in the gas turbine according to the first embodiment. Hence, quick response is possible with respect to the pressure change of the casing air, thereby enabling prevention of a trip of the gas turbine and stable operation of the gas turbine. Particularly, when this gas turbine is applied to power generation or to a gas turbine combined plant, since a trip of the gas turbine can be suppressed, power can be supplied stably. As the control method of the pressure adjusting valve 60, the control method explained in the first embodiment and the modified examples thereof can be applied.

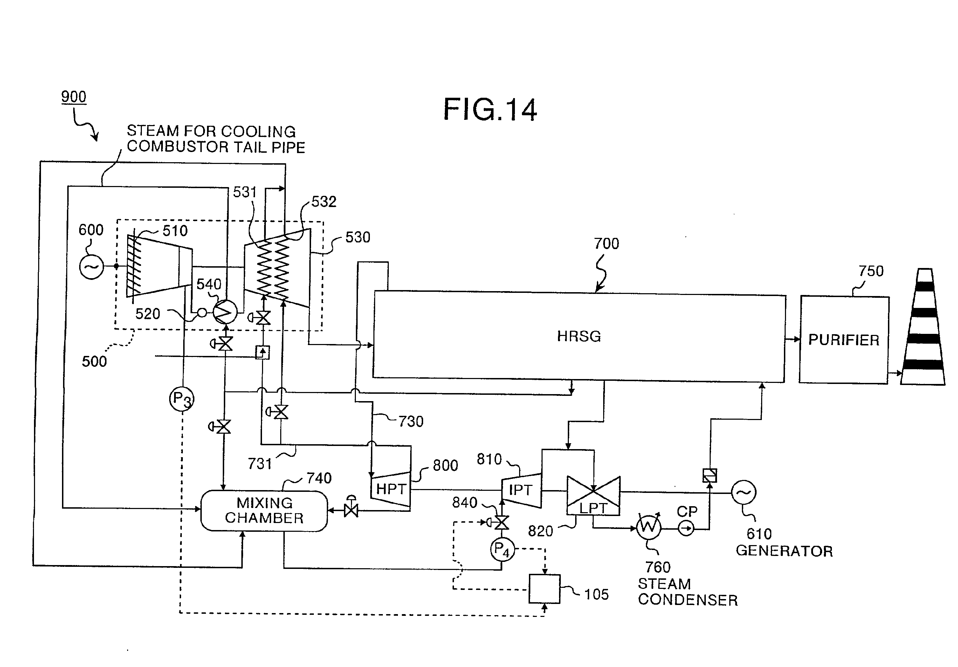

Fig. 14 is an explanatory diagram that shows one example in which the gas turbine according to this invention is applied to a gas turbine combined electric generating plant. This gas turbine combined electric generating plant comprises a gas turbine using a steam cooling system for hot members such as dynamic and stationary blades, and has a feature in that control is carried out so that the casing pressure of the gas turbine becomes lower than the steam pressure for cooling the dynamic and stationary blades.

The gas turbine 500 comprises a compressor 510, a combustor 520 and a turbine 530, and high-temperature and high-pressure air compressed by the compressor 510 is guided to the combustor 520. The combustor 520 injects a gas fuel such as a natural gas or a liquid fuel such as a light fuel oil or a light heavy fuel oil to the high-temperature and high-pressure air to burn the fuel,'to thereby generate a high-temperature combustion gas. This combustion gas is injected to the turbine 530 through a combustor tail pipe 540, and the turbine 530 converts the thermal energy contained in the high-temperature and high-pressure combustion gas into rotational energy. The compressor 510 is driven by this rotational energy, and the remaining rotational energy left after having driven the compressor 510 drives the generator 600 to thereby generate power. In this gas turbine 500, the combustor tail pipe 540 is also cooled by the steam after having driven a high pressure steam turbine 800.

The combustion gas having driven the turbine still has a temperature as high as about 600°C, and hence the combustion gas having driven the turbine is guided to an HRSG 700 to recover the thermal energy. The high-pressure steam generated by a high pressure evaporator provided in the HRSG 700 is overheated by a first high pressure superheater and a second high pressure superheater and supplied to the high pressure steam turbine 800 through a piping 730, to drive this. When the high pressure steam turbine 800 is driven, a generator 610 connected thereto generates electric power. The temperature of the combustion gas having driven the turbine decreases, since the thermal energy is collected by the high pressure superheater and the high pressure evaporator. However, the thermal energy contained in the combustion gas is further collected by an intermediate pressure superheater, a low pressure superheater, an intermediate pressure evaporator and a low pressure evaporator. The combustion gas, whose thermal energy has been collected by the HRSG 700 is cleaned by a purifier 750 having desulfurization equipment, and then released into the air.

The steam after having driven the high pressure steam turbine 800 is guided to a dynamic blade 531 and a stationary blade 532, being hot members of the gas turbine 500, by a piping 731 to cool these. At this time, an IP-GV 840 and the like, being a steam pressure adjusting unit, is controlled by a control unit 105 having a computing section and a controller, such that the steam pressure for cooling the dynamic blade 531 and the stationary blade 532, respectively, becomes higher than the casing air pressure. The control unit 105 is provided with a process or and a control section, and the above-described control is applied for the control herein. Since the IP-GV 840 is provided downstream of the dynamic blade 531 and the stationary blade 532, the steam pressure in the dynamic and stationary blades quickly changes, with opening or closing of the IP-GV 840.

The steam after having cooled the dynamic and stationary blades is guided to a mixing chamber 740, and mixed with the steam having cooled the combustor tail pipe 540, and then used for driving an intermediate pressure steam turbine 810. The steam having driven the intermediate pressure steam turbine 810 then drives a low pressure steam' turbine 820, and is guided to a steam condenser 760. Here, the steam is recovered to the water form, and supplied again to the HRSG 700. Since the intermediate pressure steam turbine 810 and the low pressure steam turbine 820 are connected to a generator 610 together with the high pressure steam turbine 800, when these turbines are driven, the generator 610 generates electric power.

As described above, in the gas turbine combined plant 900, exhaust heat of the gas turbine is recovered by the HRSG 700, and hence the thermal energy contained in the combustion gas can be recovered efficiently. Since steams having various temperature levels are generated by the HRSG, the high pressure steam turbine 800 and the like, steam having most suitable temperature level can be selected and used as a medium for cooling the hot members of the gas turbine. Therefore, temperature adjustment of the cooling steam is made minimum, thereby extra energy is not consumed for temperature adjustment, and the thermal efficiency as the whole plant can be further increased.

In the gas turbine combined plant 900 according to this invention, since the steam pressure for cooling the dynamic and stationary blades, being hot members of the gas turbine, is controlled to be higher than the casing pressure of the gas turbine, overheat of the dynamic and stationary blades due to the combustion gas can be suppressed. As a result, a risk of causing a trip of the gas turbine can be decreased, thereby the reliability as the whole plant is improved, and electric power can be supplied stably.

As described above, in the gas turbine according to one aspect of the present invention, to keep the steam pressure for cooling the dynamic and stationary blades higher than the casing pressure, in the gas turbine having a steam cooling system, the unit which adjusts the steam pressure for cooling the dynamic and stationary blades, such as a valve or the like, is provided downstream of the dynamic blade or the stationary blade. Therefore, the steam pressure for cooling the dynamic and stationary blades can be controlled with good responsiveness with respect to the operation of the cooling steam pressure control unit, and in a large span of adjustable range. As a result, since the cooling steam pressure of the dynamic and stationary blades can be controlled so as to be always higher than the casing pressure, following the fluctuations of the casing pressure, a trip of the gas turbine can be suppressed, thereby enabling stable operation.

In the gas turbine according to another aspect of the present invention, the cooling steam is made to flow to the steam flow passage for bifurcating the cooling steam to let it flow, which is provided downstream of the dynamic blade or the stationary blade, and before entering into the mixing chamber and the HRSG, to thereby adjust the steam pressure for cooling the dynamic and stationary blades. Therefore, the steam pressure for cooling the dynamic and stationary blades can be adjusted with a more quick response with respect to the operation of the steam pressure adjusting unit, as compared with the above-described gas turbine. Hence, for example, even if the casing air pressure has suddenly increased due to an abrupt increase of the load, the steam pressure for cooling the dynamic and stationary blades can be increased immediately. As a result, a trip of the gas turbine can be suppressed, thereby enabling stable operation.

Moreover, in the above gas turbine, the steam pressure value for cooling hot members is kept at a value obtained by calculating the pressure value of the casing pressure and a certain pressure value. Therefore, a delay in the response existing in the control system can be eliminated, and even if the casing pressure has increased suddenly due to an abrupt increase of the load, the steam pressure for cooling'the dynamic and stationary blades can be kept higher than the casing pressure.

Furthermore, in the above gas turbine, the cooling steam pressure is measured upstream of the cooling steam pressure control unit such as a valve and the like, and as close to the cooling steam pressure control unit as possible, and the pressure in the dynamic and stationary blades is controlled based on this measured value. Therefore, as compared with the above gas turbine, further precise control is possible, and hence the steam pressure for cooling the dynamic and stationary blades can be controlled without flowing the steam uselessly. Further, since the responsiveness of the control is improved, the steam pressure for cooling the dynamic and stationary blades can be controlled without delay, with respect to an abrupt change of the casing pressure.

Moreover, in the above gas turbine, there is provided a control unit which determines the adjusting speed of the adjusting unit based on a difference between pressures in the dynamic and stationary blades and in the casing, and controls the adjusting unit based on the determined adjusting speed. Therefore, when the casing pressure and the steam pressure for cooling the dynamic and stationary blades rapidly approach to each other, due to an abrupt increase of the load or the like, a valve which is the adjusting unit, is quickly opened or closed, thereby the steam pressure for cooling the dynamic and stationary blades quickly changes. As a result, the steam pressure for cooling the dynamic and stationary blades can be kept higher than the casing pressure, with respect to an abrupt change of the casing pressure, and hence a trip of the gas turbine can be suppressed, thereby enabling stable operation.

In the control unit according to still another aspect of the present invention, the pressure adjusting unit such as a valve provided downstream of the dynamic and stationary blades is controlled so that the steam pressure for cooling the dynamic and stationary blades is made higher than the casing pressure. Therefore, the steampressure for cooling the dynamic and stationary blades can be controlled with good responsiveness and in a large span of adjustable range. As a result, the steam pressure for cooling the dynamic and stationary blades can be always controlled to be higher than the casing pressure, following the fluctuations of the casing pressure, and a trip of the gas turbine can be suppressed, thereby enabling stable operation.

In the control unit according to still another aspect of the present invention, the adjusting speed of the adjusting unit is determined based on a difference between pressures in the dynamic and stationary blades and in the casing, and the adjusting unit is controlled at the determined adjusting speed. Therefore, when the casing pressure rapidly approaches the steam pressure for cooling the dynamic and stationary blades, the valve which is the adjusting unit is quickly opened or closed, and hence the steam pressure for cooling the dynamic and stationary blades changes quickly. As a result, with respect to an abrupt change of the casing pressure or the like, the steam pressure for cooling the dynamic and stationary blades can be kept higher than the casing pressure, and a trip of the gas turbine can be suppressed.

In the cooling steam pressure adjusting method according to still another aspect of the present invention, since the pressure adjusting unit such as a valve, provided downstream of the dynamic and stationary blades, is controlled to adjust the steam pressure for cooling the dynamic and stationary blades, the steampressure for cooling the dynamic and stationary blades can be controlled with good responsiveness and in a large span of adjustable range. As a result, the steam pressure for cooling the dynamic and stationary blades can be always controlled to be higher than the casing pressure, following the fluctuations of the casing pressure, and a trip of the gas turbine can be suppressed, thereby enabling stable operation.

The computer program according to still another aspect of the present invention realizes the cooling steam pressure adjusting method according to the present invention on a computer.

In the gas turbine combined plant according to still another aspect of the present invention, there is provided a gas turbine in which the adjusting unit such as a valve, provided downstream of the dynamic and stationary blades is controlled to adjust the steam pressure for cooling the dynamic and stationary blades. Therefore, the steam pressure for cooling the dynamic and stationary blades can be controlled with good responsiveness and in a large span of adjustable range, in response to the adjustment of the adjusting unit. As a result, a trip of the gas turbine can be suppressed, and as the whole plant, stable operation can be performed. Hence, even if electric power demand suddenly increases as in the daytime in the midsummer, a trip of the gas turbine does not occur, and electric power can be stably supplied.

In the gas turbine combined plant according to still another aspect of the present invention, there is provided a gas turbine having a steam cooling system, wherein the unit which adjusts the steam pressure for cooling the dynamic and stationary blades, such as a valve, is provided downstream of the dynamic blade or the stationary blade. The adjusting speed of the adjusting unit is determined based on a difference between pressures in the dynamic and stationary blades and in the casing, and the adjusting unit is controlled based on the determined adjusting speed, so that the steam pressure for cooling the dynamic and stationary blades is made higher than the casing pressure. Therefore, the steam pressure for cooling the dynamic and stationary blades changes quickly, from the start of the control. As a result, with respect to an abrupt change of the casing pressure or the like, a trip of the gas turbine can be suppressed. Therefore, stable operation can be performed as the whole plant, and in particular, even when. the electric power demand abruptly increases, and the load of the gas turbine suddenly increases, the electric power can be stably supplied.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. A gas turbine comprising:

   at least one hot member that is at high temperature and requires cooling;
   a steam supply unit that supplies cooling steam to the hot member;
   an adjusting unit, provided downstream of the hot member, that adjusts the pressure of the cooling steam supplied to the hot member;
   a measuring unit that measures the pressure of the cooling steam in the hot member and a casing pressure of the gas turbine; and
   a control unit that controls an operation speed of the adjusting unit such that the pressure of the cooling steam is maintained higher than the casing pressure based on the pressure of the cooling steam and the casing pressure.

2. The gas turbine according to claim 1, wherein the pressure of the cooling steam is maintained at a value obtained based on the casing pressure and a specific constant pressure.

3. The gas turbine according to claim 1, wherein the pressure of the cooling steam is measured near upstream of the adjusting unit, and the pressure of the cooling steam in the hot member is obtained based on the pressure of the cooling steam and a specific constant pressure.

4. The gas turbine according' to claim 1, wherein the control unit comprises:

   a signal generator that generates and.outputs a signal based on a rate of change of a difference between the pressure of the cooling steam in the hot member and the casing pressure; and
   a control section that receives the signal output by the signal generator and controls the operation speed of the adjusting unit based on the signal.

5. The gas turbine according to claim 1, wherein the adjusting unit is a valve.

6. A gas turbine comprising:

   at least one hot member that is at high temperature and requires cooling;
   a steam supply unit which supplies cooling steam to the hot member;
   a bifurcating flow passage provided downstream of the hot member that bifurcates the cooling steam;
   an adjusting unit that adjusts the pressure of cooling steam supplied to the hot member by changing the volume of the cooling steam supplied to the bifurcating flow passage;
   a measuring unit which measures a cooling steam pressure in the hot member and a casing pressure of the gas turbine; and
   a control unit that controls the adjusting unit such that the pressure of the cooling steam is maintained higher than the casing pressure based on the pressure of the cooling steam and the casing pressure.

7. The gas turbine according to claim 6, wherein the pressure of the cooling steam is maintained at a value obtained based on the casing pressure and a specific constant pressure.

8. The gas turbine according to claim 6, wherein the pressure of the cooling steam is measured near upstream of the adjusting unit, and the pressure of the cooling steam in the hot member is obtained based on the pressure of the cooling steam and a specific constant pressure.

9. The gas turbine according to claim 6, wherein the control unit comprises:

a signal generator that generates and outputs a signal based on a rate of change of a difference between the pressure of the cooling steam in the hot member and the casing pressure; and
a control section that receives the signal output by the signal generator and controls the operation speed of the adjusting unit based on the signal.

10. The gas turbine according to claim 6, wherein the adjusting unit is a valve.

11. A control device which adjusts the pressure of a cooling steam supplied to a hot member, which require cooling, of a gas turbine, the gas turbine including a steam supply unit that supplies the steam to the hot member; an adjusting unit that adjusts the pressure of the cooling steam; and a measuring unit that measures the pressure of the cooling steam and a casing pressure of the gas turbine, the control device comprising:

a processor that compares the pressure of the cooling steam and the casing pressure and generates and outputs a signal for operating the adjusting unit such that the pressure of the cooling steam is maintained higher than the casing pressure; and
a control unit that controls the adjusting unit based on the signal output from the processor.

12. The control device according to claim 11, wherein the adjusting unit is a valve.

13. A control device which adjusts the pressure of a cooling steam supplied to any one of a dynamic blade and a stationary blade, which require cooling, of a gas turbine, the gas turbine including a steam supply unit that supplies the steam to the hot member; an adjusting unit that adjusts the pressure of the cooling steam; and a measuring unit that measures the pressure of the cooling steam and a casing pressure of the gas turbine, the control device comprising:

a calculator that calculates a difference between the pressure of the cooling steam and the casing pressure and sets an operation speed of the adjusting unit based on a rate of change of the difference between the pressures; and
a control unit which controls the adjusting unit based on a signal from the calculator.

14. A cooling steam pressure adjusting method employed in a gas turbine of cooling a hot member of the gas turbine with cooling steam by maintaining a pressure of the cooling steam in the hot member higher than a casing pressure of the gas turbine, the method comprising:

measuring the pressure of the cooling steam and the casing pressure;
comparing the pressure of the cooling steam and the casing pressure; and
controlling the pressure of the cooling steam based on a difference between the pressure of the cooling steam and the casing pressure.

15. A computer program for realizing a cooling steam pressure adjusting method on a computer, the cooling steam pressure adjusting method employed in a gas turbine of cooling a hot member of the turbine with cooling steam by maintaining a pressure of the cooling steam in the hot member higher than a casing pressure of the gas turbine, the method comprising:

measuring the pressure of the cooling steam and the casing pressure;
comparing the pressure of the cooling steam and the casing pressure; and
controlling the pressure of the cooling steam based on a difference between the pressure of the cooling steam and the casing pressure.

16. A gas turbine combined plant comprising:

a gas turbine having at least one hot member that is at high temperature and cooled with steam, the gas turbine exhausting an exhaust gas;
a steam generator which generates steam using the exhaust gas;
a piping which guides the steam generated by the steam generator to the hot member;
an adjusting unit, provided in the piping and downstream of the hot member, that adjusts the pressure of the steam, in the piping, that is supplied to the hot member;
a measuring unit that measures a pressure of the steam in the hot member and a casing pressure of the gas turbine;
a control unit that controls the adjusting unit such that the pressure of the steam is maintained higher than the casing pressure based on the pressure of the steam and the casing pressure; and
a steam turbine that is driven by the steam generated by the steam generator.

17. The gas turbine combined plant according to claim 16, wherein the hot member is a dynamic blade or a stationary blade, and the adjusting unit is a valve.

18. A gas turbine combined plant comprising:

a gas turbine having at least one hot member that is at high temperature and cooled with steam, the gas turbine exhausting an exhaust gas;
a steam generator which generates steam using the exhaust gas;
a piping which guides the steam generated by the steam generator to the hot member;
a bifurcating flow passage, provided in the piping and downstream of the hot member, that bifurcates the steam;
an adjusting unit, provided in the piping and downstream of the hot member, that adjusts an amount of the steam flowing to the bifurcating flow passage;
a measuring unit that measures a pressure of the steam in the hot member and a casing pressure of the gas turbine;
a control unit that controls the adjusting unit such that the pressure of the steam is maintained higher than the casing pressure based on the pressure of the steam and the casing pressure; and
a steam turbine that is driven by the steam generated by the steam generator.

19. The gas turbine combined plant according to claim 18, wherein the hot member is a dynamic blade or a stationary blade, and the adjusting unit is a valve.

# FIG.1

HIGH PRESSURE
STEAM TURBINE
EXHAUST

50

10

20

20

202

203

MIXING
CHAMBER

5

204

$P_4$

30 IP-GV

$P_1$

$P_2$

$P_3$

DYNAMIC
BLADE

1

3

6

40 IP-TB

4

TO LP TURBINE

2
STATIONARY
BLADE

$T_1$

$T_2$

TO HRSG

EP 1 298 297 A2

# FIG.2

EP 1 298 297 A2

HIGH PRESSURE
STEAM TURBINE
EXHAUST

5

TO
INTERMEDIATE
PRESSURE STEAM
TURBINE

HIGH PRESSURE
STEAM TURBINE
EXHAUST

20

$P_4$

202   $P_2$

30
IP-GV

201   $P_1$

203   $P_3$

10

90

73        74

3

2

COMBUSTOR        1        75        72        71

# FIG.3

```
                    START

          ┌──────────────────────────┐
    ┌────►│    MEASURE P₁,P₃         │◄── S1
    │     └──────────────────────────┘
    │                 │
    │     ┌──────────────────────────┐
    │     │     ADD α TO P₃          │◄── S2
    │     └──────────────────────────┘
    │                 │
    │                       S3
   No          ◄────────┐
    └──────◄             │
                P₁≦P₃+α ?
                         
                     Yes │
          ┌──────────────────────────┐
          │     CLOSE IP-GV          │◄── S4
          └──────────────────────────┘
```

$$P_1 \leqq P_3 + \alpha \ ?$$

# FIG.4

```
  201      211              110  112                113      100  120
 ┌──┐   ┌──────────┐       ┌ ─ ┌──────────┐ ─ ─ ─ ─ ─ ─ ─ ─ ─ ─ ┐
 │P₁│──►│MEASURING │──────►│ │COMPARATOR│──►│ SECOND   │──┐ │ │C │
 └──┘   │INSTRUMENT│       │ └──────────┘   │COMPUTING │  │ │ │O │
        └──────────┘       │      ▲         │  UNIT    │  └►│ │N │────┐
                           │      │         └──────────┘    │ │T │    │
  203      213             │ ┌──────────┐                   │ │R │    ▼
 ┌──┐   ┌──────────┐       │ │  FIRST   │                   │ │O │   ╲│╱
 │P₃│──►│MEASURING │──────►│ │COMPUTING │                   │ │L │    ╳
 └──┘   │INSTRUMENT│       │ │  UNIT    │                   │ │E │   
        └──────────┘       │ └──────────┘                   │ │R │    30
                           └ ─ ─ ─│─ ─ ─ ─ ─ ─ ─ ─ ─ ─ ─ ─ ─┘       IP-GV
                                 111
```

## FIG.5A

PRESSURE

P₁

P₃

LOAD INCREASE   CLOSE IP-GV   TIME

## FIG.5B

PRESSURE

P₁

a

P₃

LOAD INCREASE   CLOSE IP-GV   TIME

## FIG.6A

$\alpha$

a

$\alpha = a \times L + b$

b

L

## FIG.6B

$\alpha$

$\alpha = f(L)$

L

# FIG.7

```
        ( START )
            │
    ┌───────▼──────────────────┐
    │                          │
    │   MEASURE P₃,P₄          ├── S10
    │                          │
    └───────┬──────────────────┘
            │
    ┌───────▼──────────────────┐
    │   ADD α TO P₃,           │
    │   AND ADD β TO P₄        ├── S20
    │                          │
    └───────┬──────────────────┘
            │         S30
No          ▼
    ◇───────────────────────◇
    │  P₁=P₄+β ≦ P₃+α ?      │
    ◇───────────────────────◇
            │ Yes
    ┌───────▼──────────────────┐
    │   CLOSE IP-GV            ├── S40
    └──────────────────────────┘
```

MEASURE $P_3, P_4$ — S10

ADD $\alpha$ TO $P_3$, AND ADD $\beta$ TO $P_4$ — S20

$P_1 = P_4 + \beta \leqq P_3 + \alpha$ ? — S30

CLOSE IP-GV — S40

# FIG.8

EP 1 298 297 A2

# FIG.9

```
              ( START )
                  │
                  ▼
        ┌─────────────────────┐
        │  MEASURE P₃,P₄      │──── S100
        └─────────────────────┘
                  │
                  ▼
        ┌─────────────────────┐
        │  CALCULATE P₃ + α,  │──── S200
        │    P₄ + β = P₁      │
        └─────────────────────┘
                  │
                  ▼         ┌ S300
                  ◇
          No    ╱   ╲
      ◄────────  P₁>P₃+α ?
                 ╲   ╱
                  ◇
                  │ Yes
                  ▼
        ┌─────────────────────┐
        │  CALCULATE ΔP       │──── S400
        │  = P₁ - (P3 + α)    │
        └─────────────────────┘
                  │
                  ▼         ┌ S500
                  ◇
                ╱   ╲        No
           ΔP(n)≧ΔP(n-1) ? ────►
                ╲   ╱
                  ◇
                  │ Yes
                  ▼
        ┌─────────────────────┐
        │  CLOSE IP-GV        │──── S600
        └─────────────────────┘
```

$$P_1 > P_3 + \alpha \ ?$$

$$\text{CALCULATE } \Delta P = P_1 - (P3 + \alpha)$$

$$\Delta P(n) \geqq \Delta P(n-1) \ ?$$

# FIG.10

EP 1 298 297 A2

# FIG.11A

START

MEASURE $P_1, P_2, P_3$ — S1

CALCULATE $\Delta P_1 = P_1 - P_3$, $\Delta P_2 = P_2 - P_3$ — S2

S3

$\Delta P_1(n) > \Delta P_1(n-1)$
or
$\Delta P_2(n) > \Delta P_2(n-1)$

No

Yes

CLOSE IP-GV — S4

# FIG.11B

START

MEASURE $P_1, P_2, P_3$ — S1

CALCULATE $\Delta P_1 = P_1 - P_3$, $\Delta P_2 = P_2 - P_3$ — S2

S3

$|(\Delta P_1(n)/\Delta P_1(n-1))/\Delta t| > C$
or
$|(\Delta P_2(n)/\Delta P_2(n-1))/\Delta t| > C$

No

Yes

CLOSE IP-GV — S4

# FIG.12

EP 1 298 297 A2

# FIG.13

EP 1 298 297 A2

FIG.14

# FIG.15

330

331

325

321

STEAM SUPPLY
/RECOVERY PIPE

310

311

312

# FIG.16

EP 1 298 297 A2